(19) Europäisches Patentamt
European Patent Office
Office européen des brevets

(11) **EP 3 432 327 B1**

(12) **FASCICULE DE BREVET EUROPEEN**

(45) Date de publication et mention de la délivrance du brevet:
**13.11.2019  Bulletin 2019/46**

(51) Int Cl.:
*H01F 27/40* *(2006.01)*     *H01F 27/28* *(2006.01)*
*H01H 71/12* *(2006.01)*     *H02H 7/04* *(2006.01)*

(21) Numéro de dépôt: **18184228.7**

(22) Date de dépôt: **18.07.2018**

(54) **APPAREIL ÉLECTRIQUE À ENROULEMENTS COMPRENANT DES MOYENS DE PROTECTION CONTRE LES SURINTENSITÉS**

ELEKTRISCHE VORRICHTUNG MIT WICKLUNGEN MIT ÜBERSTROMSCHUTZMITTELN

ELECTRICAL APPARATUS WITH WINDUNGS COMPRISING OVERCURRENT PROTECTION MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2017  FR 1756792**

(43) Date de publication de la demande:
**23.01.2019  Bulletin 2019/04**

(73) Titulaire: **TRANSFIX**
**83130 La Garde (FR)**

(72) Inventeurs:
• **TRIFIGNY, Philippe**
  **83210 BELGENTIER (FR)**
• **FALTERMEIER, Jean-Francis**
  **83210 SOLLIES-TOUCAS (FR)**

(74) Mandataire: **Regimbeau**
**20, rue de Chazelles**
**75847 Paris Cedex 17 (FR)**

(56) Documents cités:
**WO-A1-2014/155235     FR-A1- 2 826 173**
**FR-B1- 2 999 792        US-A1- 2005 179 515**

**Description**

## DOMAINE TECHNIQUE GÉNÉRAL

La présente invention concerne le domaine des appareils électriques connectés à un réseau électrique monophasé ou polyphasé et comportant des enroulements électromagnétiques constitués d'un bobinage de plusieurs spires de conducteur électrique.

La présente invention s'applique en particulier aux transformateurs électriques, et notamment les transformateurs moyenne tension / basse tension (MT/BT) destinés à la distribution publique de l'énergie électrique.

Plus précisément l'invention concerne l'optimisation de la protection de tels appareils électriques, notamment de transformateurs, vis-à-vis de surintensités, par exemple vis-à-vis de surintensités dues à des détériorations d'isolants.

## ART ANTÉRIEUR

Les transformateurs moyenne tension / basse tension de distribution publique sont largement répandus, situés à proximité plus ou moins immédiate des habitations ou des sites devant être alimentés. A titre d'exemple, un pays comme la France compte environ 800 000 transformateurs de distribution, situés soit sur des supports aériens, soit dans des cabines au sol ou dans des immeubles.

Ces transformateurs sont généralement isolés par un diélectrique liquide, qui peut être une huile minérale ou une huile végétale. Ce liquide étant inflammable, des dispositions doivent être prises pour supprimer les risques d'explosion et d'incendie en cas de court-circuit prolongé à l'intérieur du transformateur.

De tels courts-circuits peuvent résulter d'un vieillissement et donc d'une fragilisation des isolants dans le cas d'un appareil qui est entré dans sa phase de fin de vie (par exemple après 30 ou 40 ans d'exploitation). Mais cette fragilisation des isolants peut également résulter d'échauffements excessifs suite à des contraintes d'exploitation anormales, comme par exemple une surintensité prolongée provoquée par un court-circuit qui se maintiendrait sur le réseau basse tension alimenté par le transformateur.

Pour supprimer les risques de manifestations extérieures liées à leur défaillance, les transformateurs sont fréquemment protégés par des fusibles capables d'interrompre les courants résultant d'un défaut d'isolement avant que celui-ci ne conduise à une manifestation extérieure. Ces fusibles sont généralement situés dans un appareillage associé au transformateur et connecté directement en amont de celui-ci.

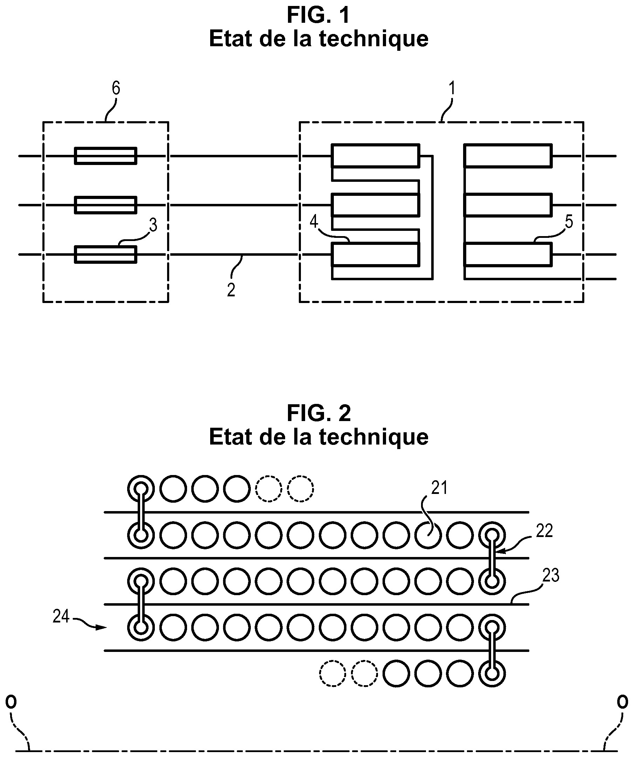

La figure 1 annexée présente un transformateur 1 tel qu'un transformateur de distribution triphasé, alimenté par un réseau 2 qui peut être un réseau moyenne tension. Le transformateur comporte des enroulements primaires 4 et secondaires 5. Le transformateur 1 est protégé contre les effets d'un défaut interne par des fusibles limiteurs de courant 3 situés par exemple dans un appareillage 6 indépendant du transformateur 1.

Les fusibles peuvent également faire partie d'un dispositif de protection situé directement dans le transformateur. Différents documents décrivent des dispositifs de protection interne. On pourra citer de manière non exhaustive les documents FR 2 826 173, FR 2 854 725, EP 1 102 379, EP 2 075 807 et EP 1122848.

Un fusible moyenne tension conventionnel n'est en mesure d'interrompre un courant et d'assurer par la suite un isolement correct que si ce courant atteint au moins une valeur appelée courant minimal de coupure I3, qui est un multiple du courant de service normal. A titre d'exemple, un fusible moyenne tension limiteur de courant de calibre 16 A, choisi pour protéger un transformateur de puissance 250 kVA et de tension primaire 20 000 V dont l'intensité assignée est 7,2 A, présente généralement un courant minimal de coupure I3 situé vers 60...70 A. Un défaut d'isolement dans un enroulement primaire du transformateur, qui est l'enroulement moyenne tension comportant un grand nombre de spires (plusieurs milliers), débute fréquemment par un court-circuit entre deux ou plusieurs spires. A ce stade du défaut, l'impédance de l'enroulement en défaut reste élevée et ne suffit pas à provoquer immédiatement un courant au moins égal à I3. Il faudra généralement que, sous l'effet d'un échauffement localisé dans la zone du défaut, le nombre de spires en court-circuit augmente suite à une destruction progressive de l'isolation du conducteur ou des isolants environnants, et atteigne a minima 10 % du nombre de spires total de l'enroulement pour que le courant de défaut soit suffisant. Il est également important que la progression du courant soit suffisamment rapide pour éviter une surchauffe du fusible avant l'atteinte du courant minimal de coupure I3, sans quoi il peut y avoir perte de fonctionnalité de ce fusible.

Un appareil électrique selon le préambule de la revendication 1 est connu par FR 2 826 173, FR 2 999 792, WO 2014/155235, US 2005/0179515.

**Problème posé**

L'évolution récente de la réglementation (par exemple le règlement EU N°548/2014) et des normes définissant les transformateurs destinés à la distribution de l'énergie électrique (par exemple la norme EN 50588) imposent l'amélioration progressive du rendement de ces appareils, ce qui revient pour partie à réduire la résistance ohmique des enroulements, ou encore, à matériau conducteur donné, à réduire la densité de courant dans les conducteurs constituant ces enroulements, en comparaison avec les transformateurs antérieurs.

A titre d'exemple, un transformateur de distribution moyenne tension / basse tension de puissance 250 kVA, qui était récemment dimensionné pour un niveau de pertes dues à la charge de 3250 W, se verra imposé dans un futur proche des pertes abaissées à 2350 W. Pour respecter de telles valeurs, dans le cas d'enroulements moyenne tension réalisés en aluminium, la densité de courant dans le conducteur passera approximativement de 1,6 A/mm$^2$ à 1,0 A/mm$^2$. Le temps nécessaire pour l'atteinte d'un échauffement adiabatique donné s'en trouvera approximativement multiplié par le facteur $1,6^2 = 2,56$. Ce temps peut être encore plus important si l'échauffement n'est plus adiabatique.

Cette évolution a donc un effet direct sur l'efficacité des dispositifs de protection cités précédemment : En cas de circulation durable d'un courant anormalement élevé, pouvant être lié à une surcharge ou un court-circuit impédant sur le réseau électrique aval, la surchauffe des enroulements se traduira par une dégradation progressive de l'un ou plusieurs de ces enroulements, débutant par un défaut entre spires ou entre couches, mais dont la vitesse d'évolution sera beaucoup plus lente que celle constatée sur des transformateurs dont le rendement n'a pas été amélioré. Il s'en suit que le ou les fusibles sollicités pourront dysfonctionner parce que le courant les traversant, insuffisant pour leur permettre un fonctionnement normal, aura engendré un échauffement conduisant à leur destruction, avec pour conséquence finale un risque d'éclatement ou d'incendie du transformateur. Un autre risque est lié à la décomposition du diélectrique liquide contenu dans la cuve du transformateur sous l'effet de la chaleur dégagée par le court-circuit. Si celui-ci n'est pas éliminé dans un délai suffisamment court, les gaz formés engendrent une surpression qui peut conduire à l'éclatement de la cuve.

## PRÉSENTATION GÉNÉRALE DE L'INVENTION

Dans ce contexte la présente invention vise à perfectionner l'état de la technique.

L'objet de la présente invention est plus précisément de pallier le risque précité en garantissant la fiabilité de la protection par fusibles d'un appareil électrique à enroulements, notamment d'un transformateur, y compris si le niveau des pertes ohmiques de l'appareil est fortement réduit dans le cadre d'une recherche d'une meilleure efficacité énergétique.

Ces buts sont atteints dans le cadre de l'invention grâce à un appareil électrique monophasé ou polyphasé, comprenant pour chaque phase au moins un enroulement électrique constitué d'un bobinage de plusieurs spires d'un conducteur électrique, caractérisé par le fait que cet enroulement comprend au moins un tronçon fusible, réalisé avec un conducteur dont les caractéristiques induisent une résistance linéique majorée par rapport à la résistance linéique du conducteur du reste de l'enroulement, de sorte à provoquer un échauffement local destructif et favoriser un court-circuit dans ce tronçon en cas de passage durable d'un courant anormal dans l'enroulement.

Le principe de l'invention réside ainsi dans l'aménagement d'un ou plusieurs tronçons fusibles au sein des enroulements moyenne tension, constitués de spires de conducteur isolé, par exemple en aluminium verni, et dont les caractéristiques, dues à la nature du matériau composant ce tronçon ou à sa section, sont telles que la densité de courant résultante soit suffisamment élevée pour qu'en cas de maintien durable d'un courant anormal traversant les enroulements, l'échauffement de ces tronçons présentant une résistance linéique élevée, conduise à un court-circuit d'une portion d'enroulement au moins égale à 10 % du nombre de spires total du fait de la destruction locale des isolants environnant ces tronçons.

Selon d'autres caractéristiques avantageuses de l'invention :

- le tronçon fusible est réalisé en un matériau choisi différent du reste de l'enroulement pour présenter une résistance linéique majorée.
- le tronçon fusible est réalisé avec une section inférieure à celle du reste de l'enroulement pour présenter une résistance linéique majorée.
- dans chaque enroulement une paire de spires constituée de deux tronçons fusibles en vis-à-vis est aménagée sur deux couches adjacentes.
- dans chaque enroulement une paire de spires constituée de deux tronçons fusibles en vis-à-vis est aménagée sur une partie de deux couches adjacentes de sorte à ce que seules les premières spires d'une première couche et les dernières spires en vis à vis de la couche suivante fassent l'objet d'une résistance linéique majorée.
- dans chaque enroulement une paire de spires constituée de deux tronçons fusibles en vis-à-vis est aménagée sur une partie de deux couches adjacentes de sorte que les tronçons fusibles soient placés au début de la couche inférieure et en fin de la couche supérieure pour appliquer entre ces tronçons une différence de potentiel maximale.
- plusieurs paires de tronçons fusibles sont aménagées dans chacun des enroulements.
- au moins un tronçon fusible est réalisé avec un conducteur en aluminium, de préférence verni.
- une différence de diamètre entre le fil constituant un tronçon fusible et le conducteur principal est compensée par un insert électriquement isolant d'épaisseur adaptée, par exemple un ruban de matériau thermiquement isolant.

- l'insert isolant est positionné de part et d'autre d'une paire constituée par deux tronçons fusibles positionnés en vis-à-vis.
- l'isolant est placé sous le tronçon fusible dans la couche inférieure et sur le tronçon fusible dans la couche supérieure.
- pour chaque phase alimentant l'appareil, un fusible de protection est inséré entre le réseau d'alimentation et l'enroulement auquel la phase est connectée.
- l'appareil électrique est un transformateur électrique et comprend pour chaque phase un enroulement primaire et un enroulement secondaire, et le ou les tronçons fusibles sont aménagés dans l'enroulement de plus haute tension.
- le tronçon fusible est placé au cœur de l'enroulement à distance de surfaces d'échange thermique avec un fluide diélectrique environnant. L'invention concerne également un transformateur triphasé comprenant un appareil du type précité et comprend en plus un dispositif de protection interne comprenant pour au moins deux phases alimentant les enroulements, un fusible dont la fonction est d'interrompre un courant de court-circuit apparaissant dans le circuit primaire du transformateur.

## PRÉSENTATION DES FIGURES

D'autres caractéristiques préférées, buts et avantages de la présente invention apparaitront à la lecture de la description détaillée qui va suivre et en regard des dessins annexés, donnés à titre d'exemples non limitatifs et sur lesquels :

- la figure 1 précédemment décrite représente schématiquement un transformateur connu de l'état de la technique,
- la figure 2 représente schématiquement une vue en coupe partielle d'un enroulement d'un tel transformateur connu de l'état de la technique,
- la figure 3 représente schématiquement une vue en coupe partielle similaire à la figure 2 d'un enroulement d'un appareil électrique conforme à la présente invention,
- la figure 4 représente une vue similaire à la figure 3, en coupe partielle d'un enroulement d'un appareil électrique conforme à une variante de la présente invention,
- la figure 5 représente une autre vue similaire aux figures 3 et 4, en coupe partielle d'un enroulement d'un appareil électrique conforme à une autre variante de la présente invention, et
- la figure 6 représente une vue similaire à la figure 1 d'un transformateur conforme à une variante de la présente invention.

Sur les figures 2 à 5, seules une demie section des enroulements est représentée, les spires étant symétriques par rapport à un plan médian référencé O-O.

## DESCRIPTION DETAILLEE DE L'INVENTION

Comme indiqué précédemment les appareils électriques conformes à la présente invention, monophasés ou polyphasés, comprennent dans l'enroulement électrique de chaque phase, constitué d'un bobinage de plusieurs spires d'un conducteur électrique, au moins un tronçon fusible, réalisé avec un conducteur dont les caractéristiques induisent une résistance linéique majorée par rapport au reste de l'enroulement, de sorte à provoquer un échauffement local destructif et favoriser un court-circuit dans ce tronçon en cas de passage durable d'un courant anormal dans l'enroulement.

La résistance linéique élevée pour le tronçon fusible peut être due soit au choix d'un matériau spécifique composant ce tronçon, soit à la section réduite de ce tronçon.

Le tronçon fusible conforme à la présente invention peut être réalisé par exemple en aluminium verni.

Un enroulement moyenne tension de transformateur moyenne tension / basse tension tel qu'un transformateur de distribution est généralement constitué d'un conducteur en cuivre ou en aluminium, préférentiellement isolé par un vernis isolant, bobiné en couches cylindriques multiples et concentriques, séparées les unes des autres par une ou plusieurs feuilles d'un isolant électrique, qui constitue l'isolation entre couche.

Ainsi le vernis du conducteur électrique assure une isolation vis-à-vis de la différence de potentiel qui peut apparaître entre deux spires voisines, quelques volts en service normal mais plusieurs centaines de volts lors de transitoires dus à des surtensions de type choc de foudre.

L'isolant entre couches, associé au vernis isolant chaque spire, assure quant à lui une isolation vis-à-vis de la différence de potentiel maximale entre deux couches de fil, soit une tension égale à la tension par spire multipliée par le double du nombre de spires par couche.

La figure 2 représente une coupe schématique partielle d'un enroulement selon l'art antérieur, où le nombre de couches 24 et le nombre de spires de conducteur 21 par couche ont été volontairement réduits par rapport à la réalité. Entre chaque couche est disposé un isolant 23 constitué d'un ou plusieurs tours d'une feuille isolante. Le passage d'une couche à la couche suivante est représenté schématiquement par un maillon 22 qui en fait est constitué par le conducteur 21 lui-même, bobiné en parallèle avec l'isolant entre couches 23.

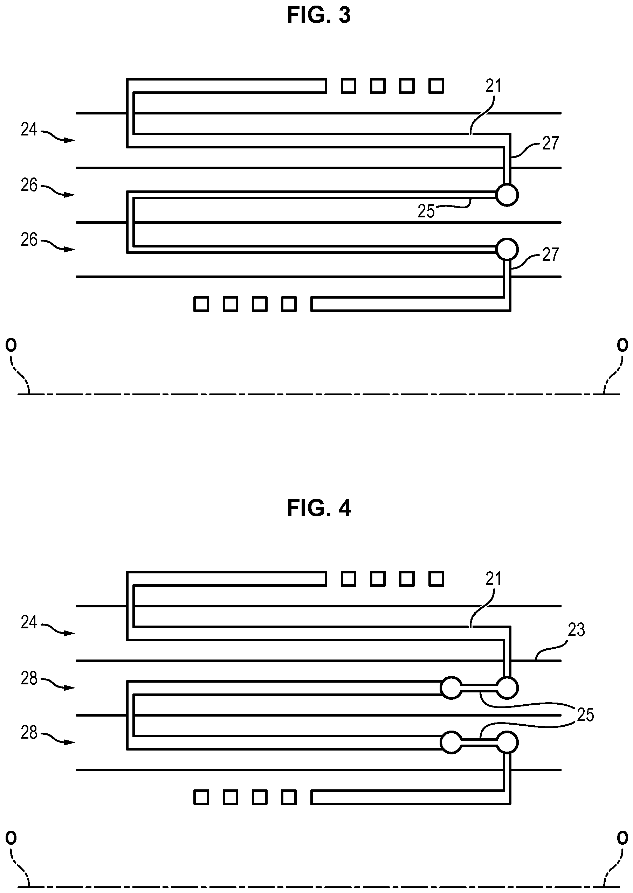

La figure 3 présente un schéma d'un enroulement selon l'invention. Par souci de simplification, les spires correspondant à une couche 24 sont représentées par un trait dont l'épaisseur est en rapport avec le diamètre du conducteur 21. Selon l'invention, deux couches adjacentes 26 sont réalisées en conducteur de section réduite 25, et un aboutement 27 entre les conducteurs 21 et 25 est pratiqué en amont et en aval des deux couches 26. L'on voit en effet sur la représentation de la figure 3 que les conducteurs 25 des couches 26 sont illustrés avec une épaisseur plus faible que les conducteurs 21 des couches 24 voisines.

A titre d'exemple, un transformateur de puissance assignée 250 kVA et de tension primaire 20 kV, dont les pertes dues à la charge sont ramenées au niveau Ak selon la norme EN 50588-1, soit 2350 W, comporte des enroulements comprenant 3000 spires, réparties en 20 couches de 150 spires d'un fil rond en aluminium verni de diamètre 2,3 mm.

Le dimensionnement de la section du conducteur d'enroulement prend en compte au moins deux aspects imposés par les normes applicables :

- La densité de courant en situation de court-circuit franc aux bornes du transformateur ne doit pas engendrer pour une durée de 2 secondes un échauffement adiabatique du conducteur dépassant 250°C pour le cuivre et 200°C pour l'aluminium, conformément à la norme CEI 60076-5. Pour respecter ces conditions, la densité de courant en situation de court-circuit doit être choisie inférieure à respectivement 98,4 $A/mm^2$ pour le cuivre et 55 $A/mm^2$ pour l'aluminium, soit pour un transformateur ayant une impédance de court-circuit de 4 %, une densité j maximale en régime assigné de 3,9 $A/mm^2$ pour le cuivre et 2,2 $A/mm^2$ pour l'aluminium.

- La densité de courant j doit donc également rester compatible avec le niveau de pertes dues à la charge prescrit. Cette densité de courant j en régime assigné intervient directement dans les pertes joule Pj de l'enroulement selon la relation suivante : $Pj = k \times j^2 \times m$ Où k est un coefficient dépendant de la nature du conducteur et m est la masse du conducteur de l'enroulement.

Or, l'aménagement d'au moins un tronçon fusible dans chaque enroulement haute tension doit être considéré de sorte à ne pas nuire au respect des deux conditions précédentes.

Dans l'exemple du transformateur 250 kVA décrit précédemment, la densité de courant en service est approximativement de 1 $A/mm^2$ du fait de l'exigence de réduction des pertes dues à la charge (niveau Ak selon la norme EN 50588), et cette densité devient en cas de court-circuit franc aux bornes secondaires du transformateur 25 $A/mm^2$, valeur très inférieure à la valeur de 55 $A/mm^2$ évoquée précédemment.

Dans un tel appareil, l'aménagement d'un tronçon fusible dans chaque enroulement moyenne tension se fera à partir d'un fil conducteur d'aluminium de diamètre 1,6 mm conduisant localement à une densité de courant de 2,07 $A/mm^2$, compatible avec la limite fixée pour la tenue adiabatique de l'appareil en cas de court-circuit. L'étendue de ce tronçon se fera sur deux couches complètes de 215 spires chacune, soit 14 % du nombre total de spires et, si elle est court-circuitée, sera suffisante pour conduire rapidement à un courant de défaut capable de provoquer la coupure du fusible, donc supérieur à I3, soit 60 A.

Cette portion d'enroulement comprenant 14 % des spires totales et dont la densité de courant sera majorée générera un supplément de pertes qu'il est nécessaire de compenser sur les 86 % de spires restantes. Ce supplément est évalué égal à : $\Delta Pj = N' \times (j2/j1 - 1)$

Où N' est le nombre de spires comprises par le tronçon fusible exprimé en %, j1 la densité de courant retenue pour un enroulement conventionnel, et j2 la densité de courant retenue pour le tronçon fusible. Dans l'exemple retenu, $\Delta Pj = 14 \times (2,07/1,0 - 1) = 15 \%$.

En conséquence, et de sorte à retrouver les pertes prescrites, la densité de courant sur le reste de l'enroulement, initialement j1, doit être réduite à approximativement

$$j1' = j1 \times ( (1 - N'/100) - \Delta Pj /100) / (1 - N'/100)$$

Soit pour notre exemple :

$$j1' = 1,0 \times (( 1 - 14/100) - 15/100) / (1 - 14/100) = 0,83 \ A/mm^2$$

Dans cet exemple, le mode de réalisation retenu consiste à aménager un tronçon en majorant la densité de courant sur deux couches adjacentes complètes de l'enroulement moyenne tension. L'aboutement entre des conducteurs de sections différentes est facilement réalisable à partir d'une solution connue consistant à réaliser une soudure avec un alliage d'étain et l'utilisation d'un manchon en cuivre ou en aluminium dont les parois sont suffisamment fines pour limiter l'encombrement de l'aboutement.

D'autres modes de réalisation peuvent être envisagés, permettant d'obtenir une sensibilité du dispositif équivalente ou meilleure tout en réduisant son impact sur les pertes joule des enroulements.

Selon une variante avantageuse présentée en figure 4, deux tronçons fusibles distincts sont aménagés sur deux couches adjacentes 28 de sorte à ce que seules les premières spires de la première couche et les dernières spires de la couche suivante fassent l'objet d'une réduction de section. Ces spires se retrouvant en vis-à-vis, de part et d'autre de l'isolant 23 séparant les deux couches 26, leur échauffement provoquera une destruction locale de celui-ci avec pour conséquence la mise en court-circuit des deux couches complètes. De cette manière, l'impact sur les pertes joule de l'enroulement est fortement minimisé. Dans l'exemple précédent, cela reviendrait par exemple à aménager deux tronçons en vis-à-vis de 10 spires chacun.

Le dispositif ne conduit alors plus qu'à une majoration très limitée de la résistance ohmique globale de l'enroulement et ne nécessitera pas de correction du diamètre du fil conducteur principal. En partant de l'exemple du 250 kVA, nous avons :

$$\Delta Pj = 2 \times 10 \ / \ 3000 \times (2{,}07/1{,}0 - 1) = 0{,}71 \ \%.$$

D'où:

$$j1' = 1{,}0 \times ((\ 1 - 20/3000) - 0{,}71/100) \ / \ (1 - 20/3000) = 0{,}9928 \ \text{A/mm}^2$$

Par rapport à la densité initiale de 1,0 A/mm$^2$, cela reviendrait à une correction du diamètre de fil pratiquement inutile, car très en deçà des tolérances que l'on rencontre sur la section des conducteurs.

Le choix de positionner ces tronçons fusibles en début de la couche inférieure et en fin de la couche supérieure est justifié par le fait que la différence de potentiel entre les deux tronçons est maximale et approximativement égale à deux fois la tension de couche soit

$$2 \times Uc = 2 \times Nc \times Usp$$

Où Uc est la tension de couche, Nc le nombre de spires par couche et Usp la tension par spire.

Cette tension, qui dans l'exemple du transformateur 250 kVA décrit précédemment serait de 2000 V, est nécessaire, d'une part, pour l'établissement rapide du court-circuit, et d'autre part, pour provoquer une augmentation du courant telle que le fusible de protection puisse fonctionner, soit une valeur supérieure à I3.

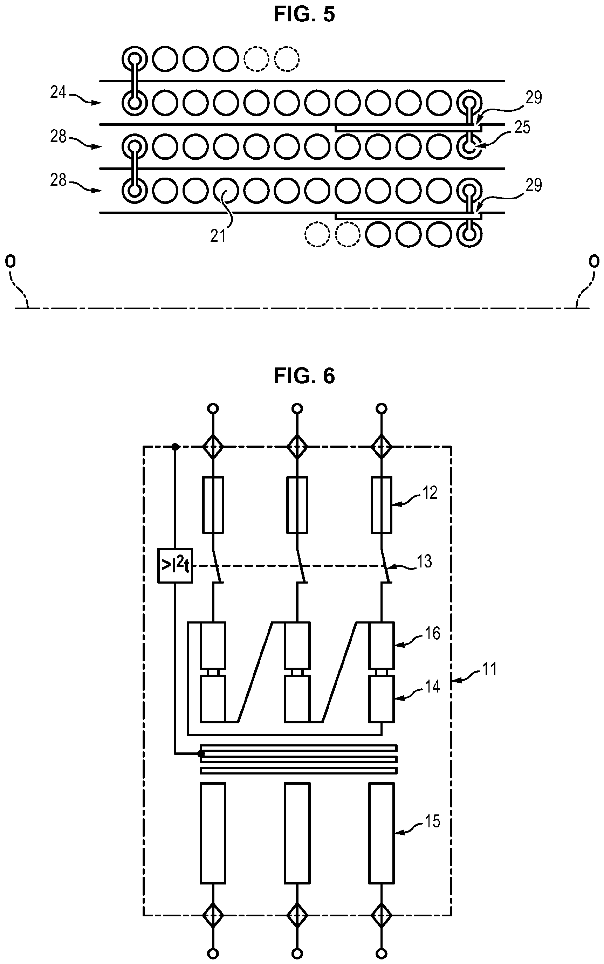

Selon la figure 5, le diamètre du conducteur 25 servant à la réalisation des tronçons fusibles étant inférieur à celui du conducteur 21 qui constitue le principal de l'enroulement, un complément d'épaisseur doit être envisagé pour maintenir la cylindricité des couches 24 et 28. Ce complément est obtenu par la mise en place d'un ruban isolant 29 dont l'épaisseur correspond sensiblement à la différence entre les diamètres du fil conducteur principal 21 et du conducteur 25 servant à la réalisation des tronçons fusibles, et dont la largeur correspond à la largeur d'un tronçon fusible. Sur la couche inférieure, il est positionné sous le tronçon fusible, alors que sur la couche suivante, il est positionné sur le tronçon fusible. De cette manière, non seulement il ne nuit pas à l'établissement du court-circuit, mais de surcroit, en étant positionné de part et d'autre des deux tronçons, il créé une barrière thermique qui favorise un échauffement local le plus adiabatique possible.

De préférence dans le cadre de la présente invention, les tronçons fusibles 25 sont adaptés quant à leur section et leur nature de matériau de telle sorte que le rapport de densité de courant j2 (densité de courant pour le tronçon fusible) / j1 (densité de courant pour un enroulement conventionnel et donc le reste de l'enroulement en dehors du tronçon fusible) est compris entre 180 et 250%.

Selon un autre mode de réalisation, il peut être envisagé de positionner plusieurs paires de ces tronçons fusibles dans chaque enroulement concerné. Leur localisation se fera préférentiellement au cœur de l'enroulement, à distance des surfaces d'échange thermique entre l'enroulement et le fluide diélectrique du transformateur ou de l'appareil électrique, et idéalement en partie supérieure de l'enroulement quand celui-ci est positionné selon un axe vertical.

L'invention peut concerner tout type de matériel électrique mono ou polyphasé alimenté par un réseau électrique, plus particulièrement un réseau moyenne tension, et protégé par un ou plusieurs fusibles limiteurs de courant. Ce matériel peut être un transformateur de distribution moyenne tension / basse tension, qui peut comprendre un dispositif de protection interne tel que décrit dans le brevet EP 1122848 déposé par la demanderesse.

La figure 6 est une représentation schématique d'un tel appareil. Le transformateur 11 comprend des enroulements moyenne tension 14 dans lesquels sont aménagés des tronçons fusibles 16, ainsi que des enroulements basse tension 15. Ce même transformateur 11 intègre une fonction de protection, constituée de deux fusibles limiteurs de courant 12 assurant l'élimination des courants de défaut polyphasés, ainsi qu'une fonction de coupure constituée d'un dispositif de déconnexion triphasé 13.

Bien entendu la présente invention n'est pas limitée aux modes de réalisation particuliers qui viennent d'être décrits.

**Revendications**

1. Appareil électrique monophasé ou polyphasé, comprenant pour chaque phase au moins un enroulement électrique constitué d'un bobinage de plusieurs spires d'un conducteur électrique, **caractérisé par le fait que** cet enroulement comprend au moins un tronçon fusible (25), réalisé avec un conducteur dont les caractéristiques induisent une résistance linéique majorée par rapport à la résistance linéique du conducteur du reste de l'enroulement (21), de sorte à provoquer un échauffement local destructif et favoriser un court-circuit dans ce tronçon (25) en cas de passage durable d'un courant anormal dans l'enroulement.

2. Appareil électrique selon la revendication 1, **caractérisé par le fait que** le tronçon fusible (25) est réalisé en un matériau choisi différent du reste de l'enroulement (21) pour présenter une résistance linéique majorée.

3. Appareil électrique selon la revendication 1, **caractérisé par le fait que** le tronçon fusible (25) est réalisé avec une section inférieure à celle du reste de l'enroulement (21) pour présenter une résistance linéique majorée.

4. Appareil électrique selon l'une des revendications 1 à 3, **caractérisé par le fait que** dans chaque enroulement une paire de spires constituée de deux tronçons fusibles en vis-à-vis (25) est aménagée sur deux couches adjacentes (26).

5. Appareil électrique selon l'une des revendications 1 à 4, **caractérisé par le fait que** dans chaque enroulement une paire de spires constituée de deux tronçons fusibles en vis-à-vis (25) est aménagée sur une partie de deux couches adjacentes (26) de sorte à ce que seules les premières spires d'une première couche et les dernières spires en vis à vis de la couche suivante fassent l'objet d'une résistance linéique majorée.

6. Appareil électrique selon la revendication précédente, **caractérisé par le fait que** dans chaque enroulement une paire de spires constituée de deux tronçons fusibles en vis-à-vis (25) est aménagée sur une partie de deux couches adjacentes (26) de sorte que les tronçons fusibles soient placés au début de la couche inférieure et en fin de la couche supérieure pour appliquer entre ces tronçons une différence de potentiel maximale.

7. Appareil électrique selon l'une des revendications 1 à 6, **caractérisé par le fait que** plusieurs paires de tronçons fusibles (25) sont aménagées dans chacun des enroulements.

8. Appareil électrique selon l'une des revendications 1 à 7, **caractérisé par le fait que** au moins un tronçon fusible est réalisé avec un conducteur en aluminium, de préférence verni.

9. Appareil électrique selon l'une des revendications 1 à 8, **caractérisé par le fait qu'**une différence de diamètre entre le fil constituant un tronçon fusible (25) et le conducteur principal (21) est compensée par un insert (29) électriquement isolant d'épaisseur adaptée, par exemple un ruban de matériau thermiquement isolant.

10. Appareil électrique selon la revendication précédente, **caractérisé par le fait que** l'insert isolant (29) est positionné de part et d'autre d'une paire constituée par deux tronçons fusibles (25) positionnés en vis-à-vis.

11. Appareil électrique selon l'une des revendications 9 ou 10, **caractérisé par le fait que** l'isolant (29) est placé sous le tronçon fusible (25) dans la couche inférieure et sur le tronçon fusible (25) dans la couche supérieure.

12. Appareil électrique selon l'une des revendications 1 à 11 **caractérisé par le fait que** pour chaque phase alimentant l'appareil, un fusible de protection (12) est inséré entre le réseau d'alimentation et l'enroulement auquel la phase est connectée.

13. Appareil électrique selon l'une des revendications 1 à 12, **caractérisé par le fait qu'**il s'agit d'un transformateur électrique, comprenant pour chaque phase un enroulement primaire (14) et un enroulement secondaire (15), et que le ou les tronçons fusibles (25) sont aménagés dans l'enroulement (14) de plus haute tension.

14. Appareil électrique selon l'une des revendications 1 à 13, **caractérisé par le fait que** le tronçon fusible (25) est placé au cœur de l'enroulement à distance de surfaces d'échange thermique avec un fluide diélectrique environnant.

15. Transformateur comprenant un appareil conforme à l'une des revendications 1 à 14, **caractérisé par le fait qu'**il est triphasé et comprend en plus un dispositif de protection interne comprenant pour au moins deux phases alimentant les enroulements, un fusible (12) dont la fonction est d'interrompre un courant de court-circuit apparaissant dans le circuit primaire (14) du transformateur.

**Patentansprüche**

1. Einphasiges oder mehrphasiges elektrisches Gerät umfassend für jede Phase mindestens eine elektrische Wicklung bestehend aus einer Spule mit mehreren Windungen eines elektrischen Leiters, **dadurch gekennzeichnet, dass** diese Wicklung mindestens einen schmelzbaren Abschnitt (25) umfasst, der mit einem Leiter gebildet wird, dessen Eigenschaften einen erhöhten längenbezogenen Widerstand im Verhältnis zum längenbezogenen Widerstand des Leiters von dem Rest der Wicklung (21) erzeugen, so dass im Fall des dauerhaften Durchgangs eines anormalen Stroms durch die Wicklung eine lokale destruktive Erwärmung bewirkt und ein Kurzschluss in diesem Abschnitt (25) gefördert wird.

2. Elektrisches Gerät nach Anspruch 1, **dadurch gekennzeichnet, dass** der schmelzbare Abschnitt (25) aus einem anderen Material als der Rest der Wicklung (21) gewählt wird, um einen erhöhten längenbezogenen Widerstand zu erzielen.

3. Elektrisches Gerät nach Anspruch 1, **dadurch gekennzeichnet, dass** der schmelzbare Abschnitt (25) mit einem Querschnitt hergestellt wird, der kleiner ist als derjenige der restlichen Wicklung (21), um einen erhöhten längenbezogenen Widerstand zu erzielen.

4. Elektrisches Gerät nach einem der Ansprüche 1 bis 3, **dadurch gekennzeichnet, dass** in jeder Wicklung ein Paar von Windungen bestehend aus zwei einander gegenüberliegenden schmelzbaren Abschnitten (25) auf zwei benachbarten Schichten (26) angeordnet ist.

5. Elektrisches Gerät nach einem der Ansprüche 1 bis 4, **dadurch gekennzeichnet, dass** in jeder Wicklung ein Paar von Windungen bestehend aus zwei einander gegenüberliegenden schmelzbaren Abschnitten (25) auf einem Teil von zwei benachbarten Schichten (26) angeordnet ist, so dass nur die ersten Windungen einer ersten Schicht und die letzten gegenüberliegenden Windungen der nächsten Schicht einen erhöhten längenbezogenen Widerstand aufweisen.

6. Elektrisches Gerät nach dem vorhergehenden Anspruch, **dadurch gekennzeichnet, dass** in jeder Wicklung ein Paar von Windungen bestehend aus zwei einander gegenüberliegenden schmelzbaren Abschnitten (25) auf einem Teil von zwei benachbarten Schichten (26) derart vorgesehen ist, dass die schmelzbaren Abschnitte an dem Anfang der unteren Schicht und an dem Ende der oberen Schicht platziert werden, um zwischen diesen Abschnitten eine maximale Potentialdifferenz anzulegen.

7. Elektrisches Gerät nach einem der Ansprüche 1 bis 6, **dadurch gekennzeichnet, dass** in jeder der Wicklungen mehrere Paare von schmelzbaren Abschnitten (25) angeordnet sind.

8. Elektrisches Gerät nach einem der Ansprüche 1 bis 7, **dadurch gekennzeichnet, dass** mindestens ein schmelzbarer Abschnitt mit einem Leiter aus Aluminium, vorzugsweise lackiert, gebildet wird.

9. Elektrisches Gerät nach einem des Anspruch 1 bis 8, **dadurch gekennzeichnet, dass** eine Durchmesserdifferenz zwischen dem Draht, der einen schmelzbaren Abschnitt (25) bildet, und dem Hauptleiter (21) durch einen elektrisch isolierenden Einsatz (29) passender Stärke, beispielsweise ein Band aus thermisch isolierendem Material, ausgeglichen wird.

10. Elektrisches Gerät nach dem vorhergehenden Anspruch, **dadurch gekennzeichnet, dass** der isolierende Einsatz (29) auf beiden Seiten eines Paars bestehend aus zwei einander gegenüberliegend angeordneten schmelzbaren Abschnitten (25) positioniert ist.

11. Elektrisches Gerät nach einem der Ansprüche 9 oder 10, **dadurch gekennzeichnet, dass** das isolierende Medium (29) in der unteren Schicht unter dem schmelzbaren Abschnitt (25) und in der oberen Schicht auf dem schmelzbaren Abschnitt (25) angeordnet ist.

12. Elektrisches Gerät nach einem der Ansprüche 1 bis 11, **dadurch gekennzeichnet, dass** für jede der Vorrichtung zugeführte Phase zwischen dem Versorgungsnetz und der Wicklung, an die die Phase angeschlossen ist, eine Schutzsicherung (12) eingefügt wird.

13. Elektrisches Gerät nach einem der Ansprüche 1 bis 12, **dadurch gekennzeichnet, dass** es sich um einen elektrischen Transformator handelt, der für jede Phase eine Primärwicklung (14) und eine Sekundärwicklung (15) umfasst, und dass der oder die schmelzbaren Abschnitte (25) in der Wicklung (14) mit der höheren Spannung angeordnet sind.

14. Elektrisches Gerät nach einem der Ansprüche 1 bis 13, **dadurch gekennzeichnet, dass** der schmelzbare Abschnitt (25) mit einer umgebenden dielektrischen Flüssigkeit im Kern der Wicklung beabstandet von Wärmeaustauschflächen angeordnet ist.

15. Transformator umfassend ein Gerät nach einem der Ansprüche 1 bis 14, **dadurch gekennzeichnet, dass** er dreiphasig ist und zusätzlich eine interne Schutzvorrichtung umfasst, die für mindestens zwei Phasen, die den Wicklungen zugeführt werden, eine Sicherung (12) umfasst, deren Funktion darin besteht, einen in dem Primärkreis (14) des Transformators auftretenden Kurzschlussstrom zu unterbrechen.

**Claims**

1. A single-phase or polyphase electrical apparatus comprising, for each phase, at least one electrical winding consisting of a coil of several turns of an electrical conductor, **characterized by** the fact that this winding comprises at least one fuse section (25), made with a conductor whose characteristics induce an increased linear resistance with respect to the linear resistance of the conductor of the remainder of the winding (21), so as to cause a destructive local heating and to promote a short-circuit in this section (25) in case of permanent passage of an abnormal current in the winding.

2. The electrical apparatus according to claim 1, **characterized by** the fact that the fuse section (25) is made of a selected material different from the remainder of the winding (21) to have an increased linear resistance.

3. The electrical apparatus according to claim 1, **characterized by** the fact that the fuse section (25) is formed with a lower section than that of the remainder of the winding (21) to have an increased linear resistance.

4. The electrical apparatus according to any of claims 1 to 3, **characterized by** the fact that, in each winding, a pair of turns consisting of two fusible sections facing each other (25) is arranged on two adjacent layers (26).

5. The electrical apparatus according to any of claims 1 to 4, **characterized by** the fact that, in each winding, a pair of turns consisting of two fusible sections facing each other (25) is arranged on a portion of two adjacent layers (26) so that only the first turns of a first layer and the last turns facing each other of the next layer are subject to an increased linear resistance.

6. The electrical apparatus according to the preceding claim, **characterized by** the fact that, in each winding, a pair of turns consisting of two fuse sections facing each other (25) is arranged on a portion of two adjacent layers (26) so that the fusible sections are placed at the beginning of the lower layer and at the end of the upper layer to apply between these sections a maximum potential difference.

7. The electrical apparatus according to any of claims 1 to 6, **characterized by** the fact that several pairs of fusible sections (25) are arranged in each of the windings.

8. The electrical apparatus according to any of claims 1 to 7, **characterized by** the fact that at least one fuse section is formed with a conductor made of aluminum, preferably painted aluminum.

9. The electrical apparatus according to any of claims 1 to 8, **characterized by** the fact that a difference in diameter between the wire constituting a fuse section (25) and the main conductor (21) is compensated by an electrically insulating insert (29) of suitable thickness, for example a thermally insulating material tape.

10. The electrical apparatus according to the preceding claim, **characterized by** the fact that the insulating insert (29) is positioned on either side of a pair consisting of two fusible sections (25) positioned facing each other.

11. The electrical apparatus according to any of claims 9 or 10, **characterized by** the fact that the insulator (29) is placed under the fuse section (25) in the lower layer and on the fuse section (25) in the upper layer.

12. The electrical apparatus according to any of claims 1 to 11, **characterized by** the fact that, for each phase supplying the apparatus, a protective fuse (12) is inserted between the supply network and the winding to which the phase is connected.

13. The electrical apparatus according to any of claims 1 to 12, **characterized by** the fact that it is an electrical transformer comprising, for each phase, a primary winding (14) and a secondary winding (15), and that the fusible section(s) (25) is/are arranged in the winding (14) of higher voltage.

14. The electrical apparatus according to any of claims 1 to 13, **characterized by** the fact that the fuse section (25) is placed in the middle of the winding away from heat exchange surfaces with a surrounding dielectric fluid.

15. A transformer comprising an apparatus according to any of claims 1 to 14, **characterized by** the fact that it is three-phased and that it further comprises an internal protection device comprising, for at least two phases supplying the windings, a fuse (12) whose function is to interrupt a short-circuit current appearing in the primary circuit (14) of the transformer.

# FIG. 1
## Etat de la technique

# FIG. 2
## Etat de la technique

## FIG. 3

## FIG. 4

## FIG. 5

## FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2826173
- FR 2854725
- EP 1102379 A
- EP 2075807 A
- EP 1122848 A
- FR 2999792
- WO 2014155235 A
- US 20050179515 A